# EUROPÄISCHE PATENTANMELDUNG

(11) **EP 1 801 568 A1**
(43) Veröffentlichungstag der Anmeldung: **27.06.2007**
(21) Anmeldenummer: 05027993.4
(22) Anmeldetag: 21.12.2005
(51) Int. Cl.: G01N 21/86, H04M 1/725

(54) **Teststreifen und Verfahren zum Messen einer Analytkonzentration in einer Probe eines biologischen Fluids**

(71) Anmelder: Micronas Holding GmbH, 79108 Freiburg i.Br. (DE)
(72) Erfinder: Klapproth, Holger, Dr., 79108 Freiburg (DE); Sieben, Ulrich, Dr. rer. nat., 79279 Vörstetten (DE); Yee, Keen, Millwood, NY 10546 (US)
(74) Vertreter: Huwer, Andreas

(57) **Zusammenfassung**

Bel einem Verfahren zum Messen einer Analyrkonzentratlon in einer Probe eines biologischen Fluids, wird ein Teststreifen (1) bereitgestellt, der auf einem Träger (2) einen bel einem Kontakt mit dem Analyt seine Farbe verändernden Farbindikator (3) und einen die Farbe Weiß und/oder eine Farbskala umfassenden Referenzfarbbereich aufweist. Die Fluid-Probe wird mit dem Farbindikator (3) in Kontakt gebracht. An dem Teststreifen (1) wird eine Kamera (6) positioniert. Für die Relativposition zwischen Kamera (8) und Teststreifen (1) wird mindestens ein Messwert erfasst und mit einem Sollwertberelch verglichen. Bei einer Abweichung zwischen dem Messwert und dem Sollwertbereich wird die Kamera (8) zum Reduzieren der Abweichung relativ zu dem Teststreifen (1) bewegt. Mit Hilfe der Kamera (8) wird ein Farbbild erfasst, auf dem zumindest der Farbindikator (3) und der Referenzfarbbereich (4) abgebildet sind. Die dem Farbindikator (3) und dem Farbabgleichbereich (4) zugeordneten Bildberelche werden lokalisiert und die Farbwerte dieser Bildberelche werden bestimmt. Anhand der Farbwerte wird mit Hilfe von vorgegebenen Vergleichswerten die Analytkonzentration in der Probe bestimmt.

## Beschreibung

Die Erfindung betrifft ein Verfahren zum Messen einer Analytkonzentration in einer Probe eines biologischen Fluids, wobei ein Teststreifen bereitgestellt wird, der auf einem Träger mindestens ein bei einem Kontakt mit dem Analyt seine Farbe verändernden Farbindikator aufweist, wobei die Fluid-Probe mit dem Farbindikator in Kontakt gebracht wird, wobei zum bildlichen Erfassen des Farbindikators und des Referenzfarbbereichs eine Kamera an dem Teststreifen positioniert wird, wobei mit Hilfe der Kamera ein Farbbild erfasst wird, auf dem zumindest der Farbindikator abgebildet ist, wobei die dem Farbindikator zugeordneten Bildbereiche in dem Farbbild lokalisiert und deren Farbwert bestimmt wird, und wobei anhand des Farbwerts mit Hilfe von vorgegebenen Vergleichswerten die Analytkonzentration in der Probe bestimmt wird. Ferner betrifft die Erfindung einen Teststreifen zum Bestimmen einer Analytkonzentration in einer Probe eines biologischen Fluids, wobei der Teststreifen einen Träger aufweist, an dem mindestens ein Farbindikator angeordnet ist, der bei einem Kontakt mit dem Analyt seine Farbe verändert.

Derartige Teststreifen werden beispielsweise in der Medizin verwendet, um leicht erfassbare physiologische Parameter, Metaboliten oder Pathogene in einem biologischen Fluid, wie z.B. Urin nachzuweisen. Die Teststreifen weisen einen Träger auf, auf dem ein Farbindikator angeordnet ist, der bei einem Kontakt mit dem Analyt seine Farbe verändert. Die Farbveränderung wird zu einem bestimmten Zeitpunkt nach dem Kontakt des Farbindikators mit der Fluid-Probe von einer zu untersuchenden Person durch Inaugenscheinnahme des Testsreifens detektiert. Dabei kann es jedoch zu Fehlablesungen kommen, beispielsweise durch eine falsche Wahrnehmung der Farbveränderung, bei ungünstigen Lichtverhältnissen, weil die Person ein eingeschränktes Farbwahrnehmungsvermögen hat oder weil der Ablesezeitpunkt nicht genau eingehalten wird. Wenn bei einem Patient der Gesundheitszustand mit Hilfe der Teststreifen über einen längeren Zeitraum überwacht wird, werden die Messergebnisse in der Regel aufgezeichnet. Auch dabei kann es zu Fehlern kommen. Außerdem ist das manuelle Protokollieren der Messergebnisse mühsam und zeitaufwändig.

Aus DE 10 2004 008 539 A1 ist ein Verfahren der eingangs genannten Art bekannt, bei dem der Teststreifen nach dem Inkontaktbringen mit dem Fluid in eine Aufnahme einer Positioniereinrichtung eingelegt wird, die an einer ortsfest zu der Positioniereinrichtung angeordneten Kamera vorgesehen ist. An der Aufnahme ist der Teststreifen in einer vorgegeben Lage relativ zu der Kamera fixiert. An der Positioniereinrichtung ist im Detektionsbereich der Kamera eine Farbskala angeordnet. Mit Hilfe der Kamera wird ein Farbbild aufgezeichet, auf dem der Teststreifen und die Farbskala abgebildet sind. Das Farbbild wird in eine Bildanalyseeinrichtung eingelesen, welche die dem Farbindikator und dem Farbabgleichbereich zugeordneten Bildbereiche lokalisiert und die Farbwerte dieser Bildbereiche bestimmt. Anhand der so ermittelten Farbwerte wird mit Hilfe von vorgegebenen Vergleichswerten die Analytkonzentration in der Probe bestimmt. Das Verfahren ermöglicht zwar eine größere Messgenauigkeit als das Ablesen der Farbveränderung durch Inaugenscheinnahme, hat jedoch den Nachteil, dass eine relativ aufwändige stationäre Bilderfassungseinrichtung (Kamera mit Positioniereinrichtung) benötigt wird. Das Verfahren ist deshalb für eine Anwendung zu Hause nur bedingt geeignet.

Es besteht deshalb die Aufgabe, ein Verfahren zu schaffen, das eine hohe Messgenauigkeit aufweist und mit geringem apparativem Aufwand durchführbar ist. Außerdem besteht die Aufgabe, einen Teststreifen der eingangs genannten Art zu schaffen, der zur Durchführung des Verfahrens geeignet ist.

Diese Aufgabe wird bezüglich des Verfahrens dadurch gelöst, dass
a) ein Teststreifen bereitgestellt wird,
   - der auf einem Träger mindestens ein bei einem Kontakt mit dem Analyt seine Farbe verändernden Farbindikator und
   - mindestens einen die Farbe Weiß und/oder eine Farbskala umfassenden Referenzfarbbereich aufweist,
b) dass die Fluid-Probe mit dem Farbindikator in Kontakt gebracht wird,
c) dass zum bildlichen Erfassen des Farbindikators und des Referenzfarbbereichs eine Kamera an dem Teststreifen positioniert wird,
d) dass mindestens ein Messwert für die Relativposition zwischen Kamera und Teststreifen ermittelt und mit einem Sollwertbereich verglichen wird,
e) dass bei einer Abweichung zwischen dem Messwert und dem Sollwertbereich die Kamera zum Reduzieren der Abweichung relativ zu dem Teststreifen bewegt und die Schritte d) und e) wiederholt werden,
f) dass mit Hilfe der Kamera ein Farbbild erfasst wird, auf dem zumindest der Farbindikator und der Referenzfarbbereich abgebildet sind,
g) dass die dem Farbindikator und dem Farbabgleichbereich zugeordneten Bildbereiche in dem Farbbild lokalisiert und die Farbwerte dieser Bildbereiche bestimmt werden, und
h) dass anhand der Farbwerte mit Hilfe von vorgegebenen Vergleichswerten die Analytkonzentration in der Probe bestimmt wird.

In vorteilhafter Weise ist es dadurch möglich, das Farbbild ohne die Verwendung einer aufwendigen Positioniereinrichtung mit einer handelsüblichen Kamera, beispielsweise einer Handy-Kamera, aufzuzeichnen und dennoch eine hohe Messgenauigkeit zu erreichen, Dabei kann die Kamera manuell an dem Teststreifen positioniert und die Lage der Kamera ggf. in Abhängigkeit von Abweichung zwischen dem Messwert für die Relativposition und dem Sollwertbereich korrigiert werden. Der Messwert für die Relativposition zwischen Kamera und Teststreifen kann beispielsweise ein Abstandsmesswert sein, der mit Hilfe eines in die Kamera integrierten Abstandssensors erfasst werden kann. Der Messwert kann aber auch dadurch ermittelt werden, dass die dem Teststreifen zugeordneten Bildbereiche mit Methoden der Bildverarbeitung in dem Farbbild lokalisiert und hinsichtlich ihrer Lage und/oder ihrer Größe ausgewertet werden. Der auf dem Teststreifen vorgesehene Farbabgleichbereich ermöglicht es, die Analytkonzentration weitgehend unabhängig von der Farbtemperatur des bei der Aufnahme des Farbbilds vorhandenen Beleuchtungslichts zu bestimmen.

Bei einer vorteilhaften Ausführungsform der Erfindung wird in Abhängigkeit von der Abweichung zwischen dem Messwert und dem Sollwertbereich ein optisches und/oder akustisches Signal erzeugt. Das optische Signal kann ein Meldungstext, eine Grafik oder ein Symbol sein, der (die/das) auf einem an der Kamera vorgesehenen Bildschirm ausgegeben wird. So kann der Benutzer beispielsweise dazu aufgefordert werden, die Kamera näher an dem Teststreifen zu positionieren oder in eine bestimmte Richtung zu verkippen, zu verdrehen und/oder zu verschieben, damit die Ebene, in der sich der Teststreifen erstreckt, genau senkrecht zur optischen Achse der Kamera angeordnet und der Teststreifen außerdem mittig und mit seiner Längsachse in eine bestimmte Richtung weisend auf dem Farbbild abgebildet wird. In entsprechender Weise kann der Benutzer aufgefordert werden, die Beleuchtung zu verändern. Dabei kann an verschiedenen Stellen des Teststreifens die Beleuchtung gemessen und mit einem Vorgabewert verglichen werden, um eine zu helle, zu dunkle und/oder ungleichmäßige Beleuchtung des Teststreifens zu detektieren. Ggf ist können kleine Beleuchtungsungleichmäßigkeiten mit Methoden der Bildverarbeitung auch noch nach Aufzeichnung des Farbbilds korrigiert werden. Das akustische Signal kann ein Signalton sein, der beispielsweise in Abhängigkeit von der Abweichung zwischen dem Messwert für die Relativposition (Kamera - Teststreifen) seine Frequenz ändert. Bevorzugt ist das akustische Signal ein Sprachausgabesignal, über das ähnlich wie bei einem Navigationssystem einfache Anweisungen an den Benutzer der Kamera übermittelt werden können. Das Sprachausgabesignal kann bei einem Kamera-Handy über einen in das Handy integrierten Lautsprecher einer Freisprecheinrichtung ausgegeben werden.

Vorteilhaft ist, wenn für den Fall, dass bei dem Vergleich keine Abweichung zwischen der Relativposition und dem Sollwertbereich ermittelt wird, das Farbbild in einem Bildspeicher abgelegt wird. Das Farbbild wird also erst gespeichert, nachdem die Kamera richtig positioniert wurde. Solange diese nicht der Fall ist, ist das Abspeichern des Farbbilds gesperrt. Dadurch wird in dem Bildspeicher Speicherplatz eingespart. Wenn der Benutzer den Zeitpunkt, an dem die Fluid-Probe mit dem Teststreifen in Kontakt gebracht wurde, beispielsweise durch Drücken eines Knopfs an der Kamera bekannt macht, ist es sogar möglich, dass das Ablegen des Farbbilds in dem Bildspeicher nur innerhalb eines bestimmten Zeitfensters freigegeben wird. Das gespeicherte Bild kann zu einem späteren Zeitpunkt aus dem Bildspeicher abgerufen und auf einem Bildschirm angezeigt und/oder gedruckt werden, beispielsweise um es einem Arzt vorzulegen und/oder es mit anderen Teststreifen-Bildern zu vergleichen.

Bei einer zweckmäßigen Ausgestaltung des Verfahrens wird die Größe und/oder Lage des Teststreifens in dem Farbbild ermittelt und mit Vorgabewerten verglichen, wobei bei einer Abweichung der Größe und/oder Lage von den Vorgabewerten das Farbbild derart geometrisch entzerrt und/oder skaliert wird, dass in dem entzerrten und/oder skalierten Farbbild die Größe und/oder Lage des Teststreifens mit den Vorgabewerten übereinstimmt. Das entzerrte bzw. skalierte Farbbild kann dann in einer Datenbank abgelegt werden. Auf diese Weise können kleinere Fehlpositionierungen der Kamera nachträglich korrigiert werden. Auf den in der Datenbank abgelegten Farbbildern weisen die Teststreifen dann alle das gleiche Format auf, so dass die Farbbilder gut miteinander vergleichbar sind.

Bei einer bevorzugten Ausführungsform der Erfindung wird die Zeitdauer zwischen dem Inkontaktbringen der Fluid-Probe mit dem Farbindikator und der Aufnahme des Farbbilds bestimmt, wobei aus der Zeitdauer, den Farbwerten und vorgegebenen Vergleichswerten die Analytkonzentration in der Probe ermittelt wird. Das Verfahren ermöglicht dadurch eine noch größere Messgenauigkeit. Zum Messen der Zeitdauer kann in die Kamera ein Zeitgeber integriert sein. Das Inkontaktbringen der Fluid-Probe mit dem Farbindikator kann der Kamera beispielsweise durch Betätigen eines an der Kamera vorgesehenen Knopfs bekannt gemacht werden.

Vorteilhaft ist, wenn eine Bildsequenz aufgezeichnet wird, die zusätzlich zu dem ersten Farbbild mindestens ein weiteres Farbbild aufweist. Die einzelnen Farbindikatoren können dann in unterschiedlichen Zeitabständen nach dem Inkontaktbringen mit der Probe bildlich erfasst werden, wobei die Zeitpunkte derart gewählt werden, dass die zu detektierenden Farbveränderungen jeweils in einem günstigen Aussteuerungsbereich liegen.

Bei einer anderen vorteilhaften Ausführungsform der Erfindung wird eine Bildsequenz aufgezeichnet, die zusätzlich zu dem ersten Farbbild mindestens ein weiteres Farbbild aufweist, auf dem zumindest der Farbindikator abgebildet ist, wobei der Zeitunterschied zwischen den Zeitpunkten, an denen die Farbbilder aufgezeichnet werden, ermittelt wird, wobei der dem Farbindikator zugeordnete Bildbereich für das wenigstens eine weitere Farbbild lokalisiert und der Farbwert dieses Bildbereichs bestimmt wird, und wobei aus dem (den) Zeitunterschied(en) und den Farbwerten und mit Hilfe von vorgegebenen Vergleichswerten die Analytkonzentration in der Probe bestimmt wird. Dabei kann aus dem zeitlichen Verlauf der Farbveränderung mit Hilfe von Tabellen die Analytkonzentration ermittelt werden.

Das erfindungsgemäße Verfahren kann mit Hilfe eines Computerprogramms ausgeführt werden, das auf einer einen Mikroprozessor aufweisenden, programmierbaren Kamera abläuft. Das Computerprogramm kann mit dem Teststreifen auf einem maschinenlesbaren Datenträger, wie z.B. einer CD/ROM oder einer Diskette geliefert werden. Der Datenträger kann auch ein Read-Only-Memory, ein Random-Access-Memory oder ein Flash-Memory sein. Das Computerprogramm kann auch im Internet auf einem Server bereitgestellt sein und von dort in die programmierbare Kamera herunter geladen werden.

Bezüglich des Teststreifens wird die vorstehend genannte Aufgabe dadurch gelöst, dass der Teststreifen einen Träger aufweist, an dem mindestens ein Farbindikator angeordnet ist, der bei einem Kontakt mit dem Analyt seine Farbe verändert, und dass der Träger mindestens einen die Farbe Weiß und/oder eine Farbskala umfassenden Referenzfarbbereich aufweist. Der Referenzfarbbereich ist also direkt an dem Träger angebracht, so dass er auf einfache Weise zusammen mit dem mindestens einen Farbindikator mittels der Kamera auf dem Farbbild abgebildet werden kann.

Bei einer bevorzugten Ausführungsform der Erfindung ist auf dem Träger mindestens eine maschinenlesbare, vorzugsweise optische Kodierung angebracht, in der eine Information über
- wenigstens eine in dem mindestens einen Farbindikator enthaltene Reagentie,
- die Lage wenigstens eines Farbindikators auf dem Träger,
- eine für zumindest einen Farbindikator vorgesehene Zeitdauer zwischen dem Inkontaktbringen der Probe mit Farbindikator und dem bildlichen Erfassen des Farbindikators,
- mindestens einen Vergleichswerte zur Bestimmung der Analytkonzentration aus den für den Farbindikator und den Referenzfarbbereich ermittelten Farbwerten und/oder
- ein Verfallsdatum des Teststreifens
direkt oder indirekt in Form eines Verweises auf eine in einem Datenspeicher einer Kamera abgelegte Information gespeichert ist. Dabei ist es sogar möglich, dass zu den einzelnen, auf dem Träger angeordneten Farbindikatoren unterschiedliche Zeiten für die zwischen dem Inkontaktbringen der Probe mit Farbindikator und dem bildlichen Erfassen des Farbindikators einzuhaltenden Zeitdauern gespeichert sind, so dass die Farbveränderung der Farbindikatoren auf dem Farbbild jeweils zu erkennen ist. Die betreffenden, in der Kodierung gespeicherten Zeitdauer-Informationen können dann mit Hilfe der Kamera optisch eingelesen und ggf. zum automatischen Auslösen der Farbbildaufzeichnungen verwendet werden. Der Benutzer kann dazu der Kamera den Zeitpunkt des Inkontaktbringens der Probe mit den Farbindikatoren beispielsweise durch Betätigen eines an der Kamera vorgesehenen Knopfs bekannt machen, woraufhin eine in der Kamera integrierte Steuereinrichtung die Zeit misst erfasst und jeweils nach Ablauf einer in einer maschinenlesbaren Kodierung gespeicherten Zeitdauer automatisch das Aufzeichnen eines Farbbilds auslöst. Nachdem das letzte Farbbild aufgezeichnet wurde, kann das Ende der Messung dem Benutzer der Kamera vorzugsweise akustisch und/oder optisch mit Hilfe einer an der Kamera vorgesehenen Anzeigeeinrichtung signalisiert werden. Mit Hilfe der optischen Kodierung ist es auch möglich, die Steuereinrichtung automatisch zu initialisieren. Die Kamera kann dann anhand der Kodierung automatisch von einer ersten, für das Fotografieren von normalen Bildern vorgesehenen Betriebsart, in eine zweite, für das bildliche Erfassen der Teststreifen vorgesehene Betriebsart, umschalten. Nach dem Detektieren der maschinenlesbaren Kodierung kann der Benutzer der Kamera ggf. aufgefordert werden, den Umschaltvorgang auszulösen oder nicht auszulösen.

Auf dem Träger kann ferner eine maschinenlesbare, vorzugsweise optische Kodierung angebracht sein, in der beispielsweise Informationen über in dem mindestens einen Farbindikator enthaltenen Reagentien, die Lage des Farbindikators (der Farbindikatoren) auf dem Träger, eine Information über die Vergleichswerte zur Bestimmung der Analytkonzentration aus den für den Farbindikator und den Referenzfarbbereich ermittelten Farbwerten und/oder ein Verfallsdatum des Teststreifens gespeichert sein können. Die Kodierung kann auch einen Verweis auf eine information enthalten, wie z.B. eine Internetadresse, unter der die Information abrufbar ist.

Vorteilhaft ist, wenn auf dem Träger nebeneinander mindestens zwei hydrophile Beschichtungsbereiche angeordnet sind, die durch wenigstens einen hydrophoben Beschichtungsbereich voneinander beabstandet sind, und wenn die Farbindikatoren als Beschichtung auf die hydrophilen Beschichtungsbereiche aufgebracht sind.

Die Farbindikatoren bzw. die Teststellen, an denen die Farbindikatoren angeordnet sind, können dann sehr kompakte Abmessungen aufweisen und dicht nebeneinander angeordnet sein, so dass eine entsprechend große Anzahl von Teststellen auf dem Träger vorgesehen sein kann. Dabei wird durch den wenigstens einen als Barriere wirkenden hydrophoben Beschichtungsbereich nach dem Inkontaktbringen des Trägers mit der Fluid-Probe ein Fluidaustausch zwischen den Teststellen und somit eine Farbverfälschung vermieden.

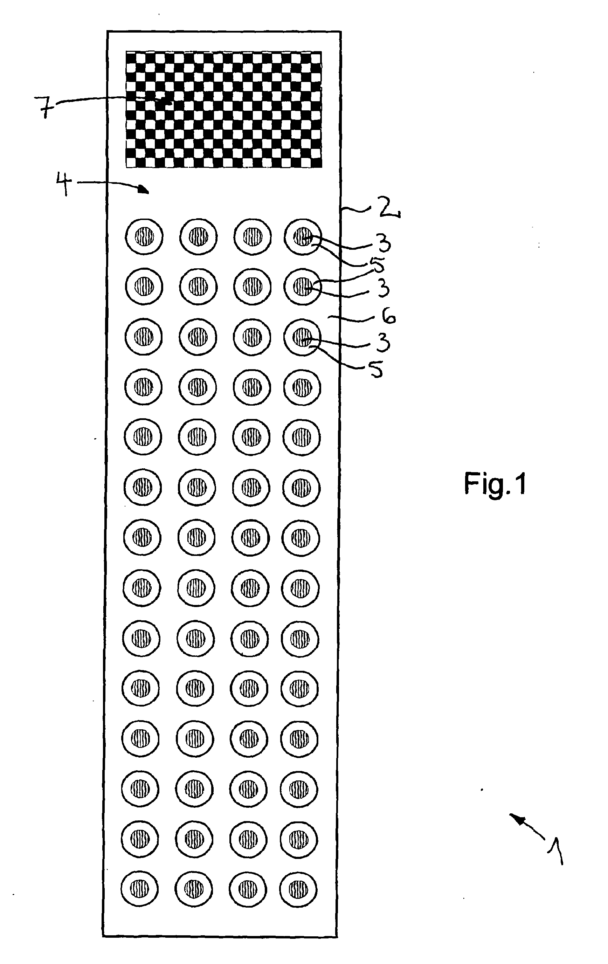

Nachfolgend ist ein Ausführungsbeispiel der Erfindung anhand der Zeichnung näher erläutert. Es zeigen:
- Fig. 1: eine Aufsicht auf einen Teststreifen,
- Fig. 2: einen Teilquerschnitt durch den Teststreifen und
- Fig. 3: eine in ein Mobiltelefon integrierte Digitalkamera beim Fotografieren des Teststreifens.
Ein in Fig. 1 im Ganzen mit 1 bezeichneter Teststreifen zum Bestimmen von Analytkonzentrationen in einer Probe eines biologischen Fluids weist einen Träger 2 mit einer weißen Oberfläche auf. Auf der Oberfläche des Trägers 2 sind mehrere voneinander beabstandete Teststellen vorgesehen, an denen jeweils ein Farbindikator 3 angeordnet ist, der bei einem Kontakt mit einem zu detektierenden Analyt aufgrund einer chemischen Reaktion in an sich bekannter Weise seine Farbe verändert. Die Teststellen sind matrixförmig in mehreren Reihen und Spalten angeordnet. Die einzelnen Teststellen sind mit unterschiedlichen Farbindikatoren beschichtet, so dass mit dem Teststreifen 1 mehrere unterschiedliche Analyte gleichzeitig nachgewiesen bzw. in ihrer Konzentration bestimmt werden können. Die weiße Oberfläche des Trägers 2 dient als Referenzfarbbereich 4, mit dessen Hilfe es möglich ist, Abweichungen des Spektralbereichs des Umgebungs- oder Beleuchtungslichts von einem Sollspektralbereich zu kompensieren.

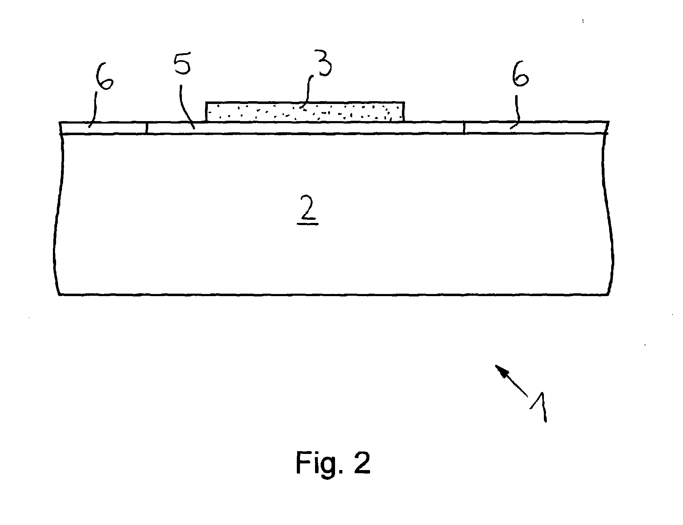

In Fig. 1 und 2 ist erkennbar, dass die Farbindikatoren 3 jeweils auf einem hydrophilen Beschichtungsbereich 5 angeordnet sind, der auf die Oberfläche des Trägers 2 aufgebracht ist. Zwischen den hydrophilen Beschichtungsbereichen 5 ist ein hydrophober Beschichtungsbereich 6 vorgesehen, der nicht mit einem Farbindikator beschichtet ist und die hydrophilen Beschichtungsbereiche 5 umgrenzt.

Neben der Matrix mit den Teststellen ist auf dem Träger 2 eine zweidimensionale optische Kodierung angebracht, in der ein Verweis auf eine im Internet hinterlegte Tabelle mit technischen Daten über den Teststreifen 1 gespeichert ist. In der Tabelle sind Angaben über die Abmessungen des Teststreifens 1, über die Anordnung der einzelnen Testfelder an der Oberfläche des Testsreifens 1, über Reagenzien, die in den Farbindikatoren 3 enthalten sind, und Angaben über die Farbveränderung der Testfelder, die bei einem Konatkt mit unterschiedlich konzentrierten Analyten auftritt abgelegt.

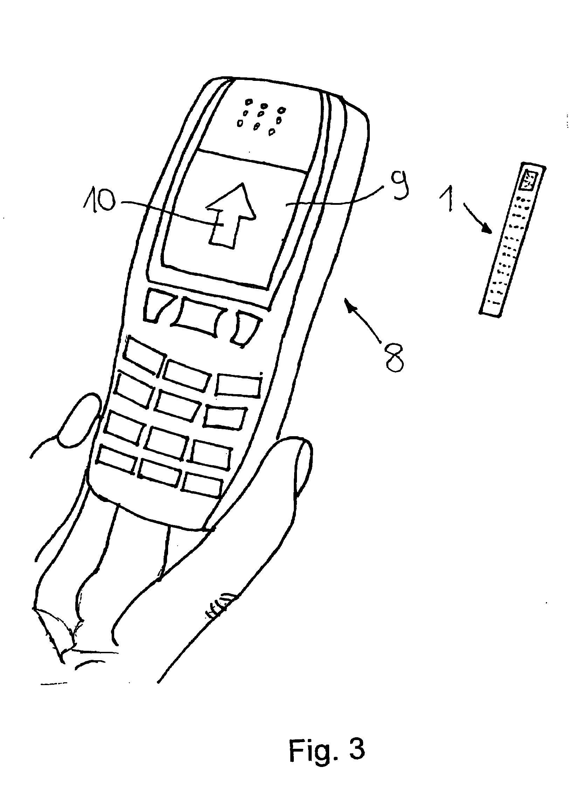

Zum Messen der Konzentrationen der zu untersuchenden Analyten wird die Fluid-Probe zunächst mit den Farbindikatoren 3 in Kontakt gebracht. Der Teststreifen 1 kann dazu beispielsweise kurz in die Fluid-Probe eingetaucht und wieder aus dieser herausgezogen werden. Danach wird zum bildlichen Erfassen der Farbindikatoren 3 und der weißen Oberfläche des Trägers 2 eine Kamera 8 an dem Teststreifen 1 positioniert, die in ein Mobiltelefon integriert ist (Fig. 3). Die Erfindung ist jedoch nicht auf die Verwendung einer Handy-Kamera beschränkt und kann auch mit Hilfe einer anderen Kamera durchgeführt werden.

Die Kamera 8 wird mit ihrem Objektiv zunächst grob vom Benutzer auf den Teststreifen 1 ausgerichtet. Die Kamera 8 weist in der Zeichnung nicht näher dargestellte Sensoren zur Erfassung der Relativposition zwischen der Kamera 8 und dem Teststreifen 1 auf, nämlich einen Infrarot-Abstandssensor und einen flächigen Farbbildsensor, beispielsweise einen CCD-Chip, auf den der Teststreifen 1 mittels eines Objektivs abgebildet wird. Mit Hilfe des Farbbildsensors wird ein Farbbild aufgezeichnet, auf dem der Teststreifen 1 mit den Farbindikatoren 3 und der weißen Oberfläche des Trägers 2 abgebildet ist.

Mit Hilfe des Abstandssensors wird der Abstand zwischen der Kamera 8 und dem Teststreifen 1 gemessen und mit einem vorgegebenen ersten Sollwertbereich verglichen.

Die Kamera 8 wird durch einen programmierbaren Mikroprozessor gesteuert, der mit einem Programmspeicher verbunden ist, in dem ein Computerprogramm abgelegt ist, das mit Methoden der Bildverarbeitung die Lage und Größe des Abbilds des Teststreifens 1 in dem Farbbild bestimmt und mit einem vorgegebenen zweiten Sollwertbereich vergleicht.

Wird bei dem Vergleich der Messwerte mit den Sollwertbereichen eine Abweichung festgestellt, wird auf einem an der Kamera 8 vorgesehenen Bildschirm 9 ein Hinweis an den Benutzer der Kamera 8 ausgegeben, aus dem ersichtlich ist, wie die Lage der Kamera 8 relativ zu dem Teststreifen 1 zu ändern ist, damit sich die Abweichung reduziert. In Fig. 3 ist erkennbar, dass auf dem Bildschirm 9 beispielsweise ein Pfeil 10 abgebildet werden kann, um anzudeuten, dass die Kamera 8 in Richtung des Pfeils 10 verschoben werden muss, um die Kamera 8 in die richtige Position zu bringen. In entsprechender Weise kann anstelle des Pfeils 10 oder zusätzlich zu diesem auch eine Textmeldung auf dem Bildschirm 9 angezeigt werden.

Nach einer vorgegebenen Zeitdauer werden mittels des Abstandssensors, des Farbbildsensors und des Computerprogramms neue Messwerte ermittelt und mit den Sollwertbereichen verglichen. Wird dabei erneut eine Abweichung festgestellt, wird ein weiterer Hinweis auf dem Bildschirm 9 angezeigt. Dies wird solange wiederholt, bis der Benutzer die Kamera 8 schließlich in die durch die Sollwertbereiche vorgegebene Lage gebracht hat.

Dann wird von dem Computerprogramm das Aufzeichnen einer Bildsequenz ausgelöst. Dabei werden mit Hilfe des Farbbildsensors nacheinander in vorgegebenen Zeitabständen mehrere Farbbilder aufgezeichnet, auf denen jeweils die Farbindikatoren 3 und die weiße Oberfläche des Trägers 2 abgebildet sind. Bei Bedarf kann der Teststreifen1 mittels eines in die Kamera 8 integrierten Blitzlichts oder dergleichen Lichtquelle während der Aufnahme künstlich beleuchtet werden. Die Farbbilder werden in einem in der Kamera 8 angeordneten Bildspeicher abgelegt. Bei Bedarf können sie über das Mobiltelefon an einen separaten Computer, der beispielsweise in einer von dem Aufzeichnungsort entfernten Arztpraxis stehen kann, übermittelt werden.

Mit Hilfe des Computerprogramms werden für jedes Farbbild jeweils die den einzelnen Farbindikatoren und der weißen Trägeroberfläche zugeordneten Bildbereiche lokalisiert und die Farbwerte dieser Bildbereiche bestimmt.

Anhand der Farbwerte werden mit Hilfe von vorgegebenen Vergleichswerten, die beispielsweise in Form einer Tabelle vorliegen können, die Analytkonzentrationen der einzelnen Analyten in der Probe bestimmt. Die so erhaltenen Messwerte werden auf dem Bildschirm angezeigt, beispielsweise in Textform und/oder in graphischer Darstellung (z.B. Balkendiagramm). Die Messwerte können ebenfalls über das Mobiltelefon an einen separaten Computer und/oder eine separate Anzeige übermittelt werden, vorzugsweise per E-Mail. Ferner können die Messwerte und/oder die die Farbveränderung der Farbindikatoren 3 dokumentierenden Farbbilder an eine Gesundheitsdatenbank übermittelt werden.

## Patentansprüche

1. Verfahren zum Messen einer Analytifonzentration in einer Probe eines biologischen Fluids,
a) wobei ein Teststreifen (1) bereitgestellt wird,
- der auf einem Träger (2) mindestens ein bei einem Kontakt mit dem Analyt seine Farbe verändernden Farbindikator (3)und
- mindestens einen die Farbe Weiß und/oder eine Farbskala umfassenden Referenzfarbbereich aufweist,
b) wobei die Fluid-Probe mit dem Farbindikator (3) in Kontakt gebracht wird,
c) wobei zum bildlichen Erfassen des Farbindikators (3) und des Referenzfarbbereichs (4) eine Kamera (8) an dem Teststreifen (1) positioniert wird,
d) wobei mindestens ein Messwert für die Relativposition zwischen Kamera (8) und Teststreifen (1) ermittelt und mit einem Sollwertbereich verglichen wird,
e) wobei bei einer Abweichung zwischen dem Messwert und dem Sollwertbereich die Kamera (8) zum Reduzieren der Abweichung relativ zu dem Teststreifen (1) bewegt und die Schritte d) und e) wiederholt werden,
f) wobei mit Hilfe der Kamera (8) ein Farbbild erfasst wird, auf dem zumindest der Farbindikator (3) und der Referenzfarbbereich (4) abgebildet sind,
g) wobei die dem Farbindikator (3) und dem Farbabgleichbereich (4) zugeordneten Bildbereiche in dem Farbbild lokalisiert und die Farbwerte dieser Bildbereiche bestimmt werden, und
h) wobei anhand der Farbwerte mit Hilfe von vorgegebenen Vergleichswerten die Analytkonzentration in der Probe bestimmt wird.

2. Verfahren nach Anspruch 1, **dadurch gekennzeichnet, dass** in Abhängigkeit von der Abweichung zwischen dem Messwert und dem Sollwertbereich ein optisches und/oder akustisches Signal erzeugt wird.

3. Verfahren nach Anspruch 1 oder 2, **dadurch gekennzeichnet, dass** für den Fall, dass bei dem Vergleich keine Abweichung zwischen Relativposition und Sollwertbereich ermittelt wird, das mindestens ein Farbbild in einem Bildspeicher abgelegt wird.

4. Verfahren nach einem der Ansprüche 1 bis 3, **dadurch gekennzeichnet, dass** die Größe und/oder Lage des Teststreifens (1) in dem Farbbild ermittelt und mit Vorgabewerten verglichen wird, und dass bei einer Abweichung der Größe und/oder Lage von den Vorgabewerten das Farbbild derart geometrisch entzerrt und/oder skaliert wird, dass in dem entzerrten und/oder skalierten Farbbild die Größe und/oder Lage des Teststreifens (1) mit den Vorgabewerten übereinstimmt.

5. Verfahren nach einem der Ansprüche 1 bis 4, **dadurch gekennzeichnet, dass** die Zeitdauer zwischen dem Inkontaktbringen der Fluid-Probe mit dem Farbindikator (3) und der Aufnahme des Farbbilds bestimmt wird, und dass aus der Zeitdauer, den Farbwerten und vorgegebenen Vergleichswerten die Analytkonzentration in der Probe ermittelt wird.

6. Verfahren nach einem der Ansprüche 1 bis 5, **dadurch gekennzeichnet, dass** eine Bildsequenz aufgezeichnet wird, die zusätzlich zu dem ersten Farbbild mindestens ein weiteres Farbbild aufweist.

7. Verfahren nach einem der Ansprüche 1 bis 6, **dadurch gekennzeichnet, dass** eine Bildsequenz aufgezeichnet wird, die zusätzlich zu dem ersten Farbbild mindestens ein weiteres Farbbild aufweist, auf dem zumindest der Farbindikator (3) abgebildet ist, dass der Zeitunterschied zwischen den Zeitpunkten, an denen die Farbbilder aufgezeichnet werden, ermittelt wird, dass der dem Farbindikator (3) zugeordnete Bildbereich für das wenigstens eine weitere Farbbild lokalisiert und der Farbwert dieses Bildbereichs bestimmt wird, und dass aus dem (den) Zeitunterschied(en) und den Farbwerten und mit Hilfe von vorgegebenen Vergleichswerten die Analyykonzentration in der Probe bestimmt wird.

8. Computerprogramm, das auf einer einen Mikroprozessor aufweisenden, programmierbaren Kamera, insbesondere einer Handy-Kamera ablauffähig ist, **dadurch gekennzeichnet, dass** das Computerprogramm zur Ausführung eines Verfahrens nach einem der Ansprüche 1 bis 6 geeignet ist, wenn es auf der Kamera abläuft

9. Computerprogramm nach Anspruch 8, **dadurch gekennzeichnet, dass** es auf einem Speicherelement, insbesondere einem Read-Only-Memory, einem Random-Access-Memory oder einem Flash-Memory abgespeichert ist.

10. Server mit einem einen Datenspeicher aufweisenden Mikrocomputer, der an eine Telekommunikationseinrichtung angeschlossen ist und/oder einen Internetzugang aufweist, **dadurch gekennzeichnet, dass** in dem Datenspeicher ein Computerprogramm nach Anspruch 7 abgelegt ist, und dass der Server derart ausgestaltet ist, dass das Computerprogramm über die Telekommunikationseinrichtung und/oder den Internetzugang von dem Datenspeicher herunterladbar ist.

11. Teststreifen (1) zum Bestimmen einer Analytkonzentration in einer Probe eines biologischen Fluids, wobei der Teststreifen (1) einen Träger (2) aufweist, an dem mindestens ein Farbindikator angeordnet ist, der bei einem Kontakt mit dem Analyt seine Farbe verändert, **dadurch gekennzeichnet, dass** der Träger mindestens einen die Farbe Weiß und/oder eine Farbskala umfassenden Referenzfarbbereich aufweist.

12. Teststreifen (1) nach Anspruch 11, **dadurch gekennzeichnet, dass** auf dem Träger nebeneinander mindestens zwei hydrophile Beschichtungsbereiche angeordnet sind, die durch wenigstens einen hydrophoben Beschichtungsbereich voneinander beabstandet sind, und dass die Farbindikatoren als Beschichtung auf die hydrophilen Beschichtungsbereiche aufgebracht sind.

13. Teststreifen (1) nach Anspruch 11 oder 12, **dadurch gekennzeichnet, dass** auf dem Träger mindestens eine maschinenlesbare, vorzugsweise optische Kodierung angebracht sein, in der eine Information über
- wenigstens eine in dem mindestens einen Farbindikator (3) enthaltene Reagentie,
- die Lage wenigstens eines Farbindikators (3) auf dem Träger (2),
- eine für zumindest einen Farbindikator vorgesehene Zeitdauer zwischen dem Inkontaktbringen der Probe mit Farbindikator (3) und dem bildlichen Erfassen des Farbindikators (3),
- mindestens einen Vergleichswerte zur Bestimmung der Analytkonzentration aus den für den Farbindikator und den Referenzfarbbereich ermittelten Farbwerten und/oder
- ein Verfallsdatum des Teststreifens
direkt oder indirekt in Form eines Verweises auf eine in einem Datenspeicher einer Kamera (2) abgelegte Information gespeichert ist.
